Europäisches Patentamt

European Patent Office

Office européen des brevets

(19)

(11) EP 1 138 432 A2

(12) **EUROPEAN PATENT APPLICATION**

(43) Date of publication:
04.10.2001 Bulletin 2001/40

(51) Int Cl.⁷: **B23P 15/00**, B21D 53/88,
B60G 7/00, B60G 11/27

(21) Application number: 01302703.2

(22) Date of filing: 23.03.2001

(84) Designated Contracting States:
**AT BE CH CY DE DK ES FI FR GB GR IE IT LI LU
MC NL PT SE TR**
Designated Extension States:
**AL LT LV MK RO SI**

(30) Priority: 25.03.2000 GB 0007192

(71) Applicant: **Tinsley Bridge Limited
Sheffield S9 2DZ (GB)**

(72) Inventors:
• **Coddington, Philip Anthony
Sheffield S11 9HQ (GB)**

• **Wild, Mark James
Kimberworth, Rotherham S61 1JT (GB)**
• **Aspey, Stephen
Millhouses, Sheffield S7 2DE (GB)**

(74) Representative:
**Burrington, Alan Graham Headford et al
Atkinson Burrington
25-29 President Buildings
President Way
Sheffield S4 7UR (GB)**

(54) **Motor vehicle suspension arm and its manufacturing process**

(57)     A motor road vehicle suspension comprises an elongated arm having a leading cantilever portion and a trailing cantilever portion, the two portions being integral with one another, the suspension link being tapered both in width and thickness.

Fig.3a

**Description**

The present invention relates to motor road vehicle suspension elements and methods of manufacturing them and is more particularly concerned with the design and manufacture of suspension links which have particular application in the suspensions of semi-trailers intended to be used with a tractor to form a tractor semi-trailer combination. The present invention is more particularly concerned with the manufacture of such suspension links which are suitable for use with air suspensions in such semi-trailers. However, the invention is not limited to the applications just discussed but could have applications in connection with other suspension components or links.

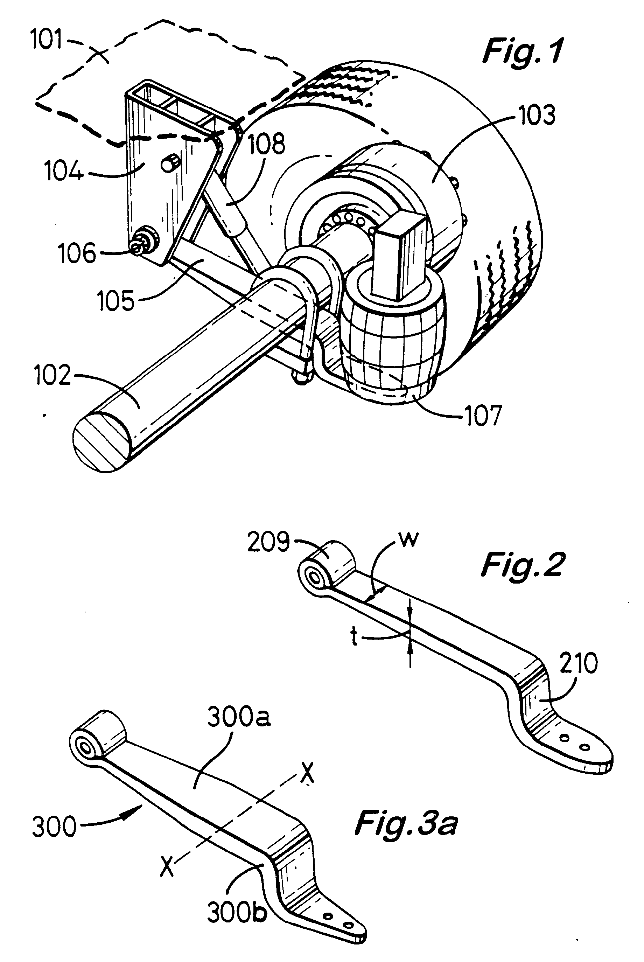

*Figure 1* illustrates a typical known type of air suspension arrangement for a semi-trailer, the drawing having been simplified in order to illustrate that part of the suspension to which the present invention can be applied.

The semi-trailer is indicated at **101,** there being a road axle **102** which carries the trailers road wheels, one of which is shown at **103**. The front of the vehicle is at the left when viewed in *Figure 1.*

The road axle **102** is movably connected to the underside of the semi-trailer **101** via two suspension brackets **104** associated with the two ends of the axle **102,** only one of the brackets **104** being shown in *Figure 1.*

The axle **102** is connected to the suspension brackets **104** by two suspension links **105,** only one of which is shown in *Figure 1.*

The leading end of each suspension link **105** is pivotal at **106** from the associated suspension bracket **104,** the trailing end of each link **105** having an air suspension unit **107** mounted on it, the other end of each air suspension unit **107** reacting against the underside of the semi-trailer **101.**

A hydraulic damper(shock absorber) **108** is connected between each of the suspension brackets **104** and the axle **102.**

The suspension system just described and shown diagrammatically in *Figure 1* is well known and is only one example of a typical air suspension system which employs links **105.**

The present invention is concerned with the design, construction and manufacture of the suspension links **105** and other equivalent suspension links that could be used in motor road vehicle road wheel suspensions.

*Figure* 2 is a perspective view, on a larger scale, of the known suspension link **105** shown in *Figure 1*. This suspension link is manufactured from steel and has an eye **209** at its leading end and is stepped down at **210** at its trailing end. It is of substantially constant width w but is tapered in thickness t towards its leading end.

For i) a given design performance for the link **105,** ii) existing manufacturing constraints, iii) the packaging limitations of the suspension system as a whole and iv) the requirements related to the secure mounting of the axle **102** in relation to the suspension link **105,** the known method of designing and manufacturing such suspension links results in the relatively crude tailoring or matching of the link to the design requirements with the result that for the link to perform satisfactorily it finishes up containing redundant material, ie surplus steel.

This redundancy not only increases the cost of the link but perhaps more importantly adds to the weight of the suspension arrangement and thus to the semi-trailer or other vehicle as a whole.

The need to reduce cost and weight from the suspension system has lead some manufacturers to reduce the width of the link along its full length. This change allows the use of smaller, lighter and lower cost fixing components. There are however drawbacks to this approach, particularly in the ability to effectively clamp the link at the centre due to the narrower link having an increased thickness. There is also a significant reduction in the lateral stiffness and consequent increase in lateral stresses, thereby reducing the performance potential of the system.

The present invention is concerned with an improved design of suspension link, an improved method of designing such a link, an improved method of manufacturing such a link and also with the equipment required to manufacture such a link.

According to the present invention, the suspension link is tapered both in width and thickness in order to minimise the amount of material comprising the link for a given performance specification.

How the invention may be carried out will now be described by way of example only and with reference to the accompanying drawings, in which:

*Figure 1* is a perspective view showing a known type of motor road vehicle road wheel suspension arrangement;
*Figure 2* is a perspective view on an enlarged scale showing the known suspension link incorporated in the suspension arrangement of *Figure 1;*
*Figure 3a* is a view similar to *Figure 2* but showing a suspension link designed and manufactured according to the present invention;
*Figure 3b* is a side elevational view of the link of *Figure 3a;*
*Figure 3c* is a plan view of the link of *Figure 3a;*
*Figure 4* is a flow chart illustrating the steps in the design method employed for designing a link such as that shown in *Figure 3;*
*Figure 5a* illustrates the calculated thickness profile (not the actual profile) of the leading cantilever half 300a of the suspension link of *Figure 3;*

*Figure 5b* illustrates the calculated width profile of the leading cantilever half **300a;**

*Figure 6* relates to the intermediate width tapered dimensions for the leading cantilever **300a;**

*Figure 7* is similar to *Figure 5* but relates to the trailing cantilever **300b;**

*Figure 8* illustrates an intermediate stage in the designing process in respect of determining the intermediate width tapered dimensions of the trailing cantilever **300b;**

*Figure 9* illustrates the four basic steps in the manufacturing process, according to the present invention, for producing a link such as that shown in *Figure 3;*

*Figure 10* is a flow chart illustrating the manufacturing process in more detail than *Figure 9;* and

*Figure 11* illustrates the roll profile of one pair of the rolls which are used to shape the link during the width tapering operation (*Figure 9b*) to produce intermediate profiles (*Figures 6* and *8*).

**Prior Art**

The need to reduce the cost and the weight of a vehicle suspension system has been tackled in a number of ways from the point of view of optimising the design of the suspension components. For example, some manufacturers have reduced the width of the known type of suspension link shown in *Figure 2* along its full length in order to reduce its weight. This has the advantage that it allows the use of smaller lighter and lower cost fixing components between the link and the main body of the trailer. There are, however, drawbacks to this approach, particularly in the ability to effectively clamp the link at its centre to the trailer body, typically by means of the arrangement shown in *Figure 1.* The problem arises because of the smaller clamping area in plan view and the increased thickness t of the link at the clamping point. The increased thickness and reduced width make it difficult for the steel stock supplier to produce the raw material to the correct shape.

The narrowing of the link also results in a significant reduction in its lateral stiffness and a consequential increase in lateral stresses. The overall performance potential of the suspension system is thereby reduced.

**The Invention**

The essence of the present invention is the concept of designing such a suspension link so that it has a dual-taper. In other words the link is tapered both in plan and elevation in such a way as to optimise the amount of material required to manufacture the link for a given performance specification. Whilst it has been known for many years to design tapered leaf springs for use in vehicle suspensions the design approach of the present invention has not been one employed by the designers of either trailer suspensions or suspension arms.

Manufacturers of suspension links such as that shown in *Figure 2* do not manufacture the links from scratch in the sense of working from the basic steel but instead purchase off-the-shelf steel bars from which the suspension links are formed typically by a rolling process. The basic steel bar or stock is available in a number of sizes and detailed variations as far as the shape is concerned. More particularly, where bar stock of rectangular cross section is involved the four edges of the bar stock can be provided with a small radius rather than being left with a relatively sharp square edge. An example of such a radiused edge is known as a Continental Square Edge.

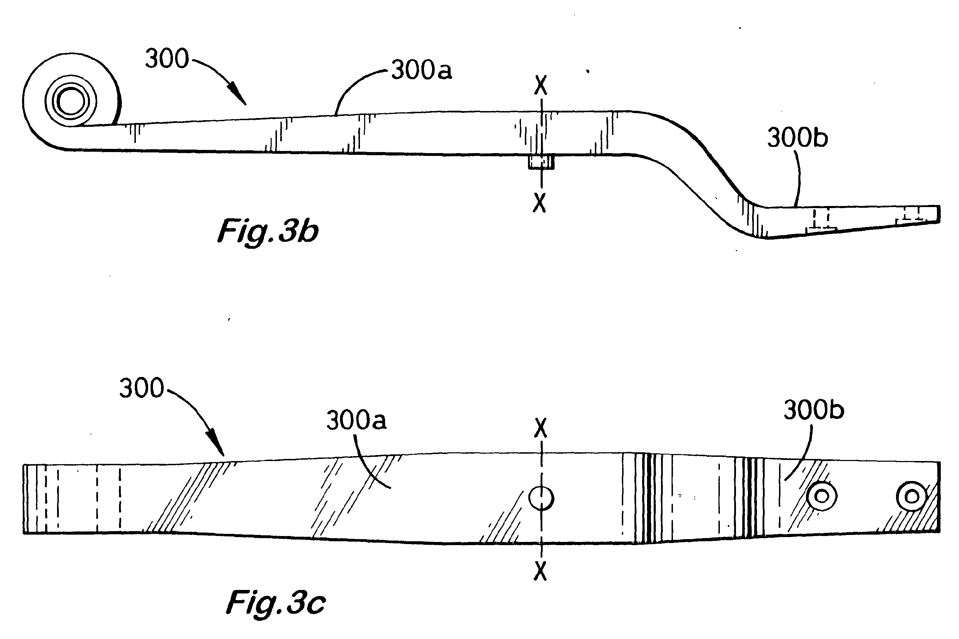

A motor road vehicle suspension link **300** according to the present invention is shown in *Figure 3.* It can be considered to be made up of two portions **300a** and **300b** which are integral with one another and which fall on either side of the dotted line x-x which represents the mounting line or zone of the link when in use. The portion **300a** is now referred to as the leading cantilever and the portion **300b** as the trailing cantilever.

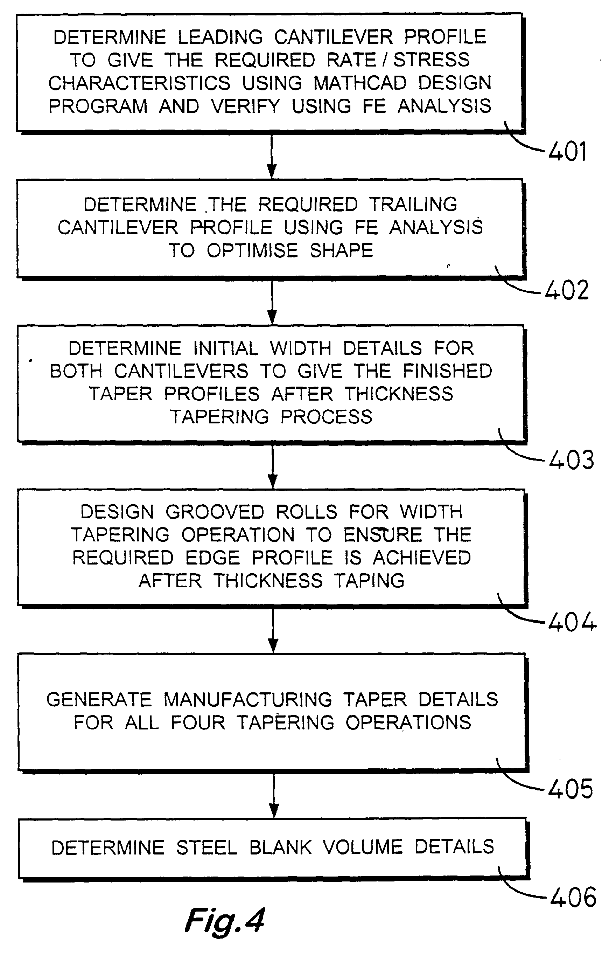

**Design Method:** *Figures 4* to *8*

The first step in the design process is to determine the cantilever profile of the leading part **300a** of the suspension link **300** in order to give the required rate and stress characteristics. This can be done in a number of ways, but preferably is carried out using so-called Mathcad (RTM) Design (Mathcad (RTM) being a mathematical tool). The Mathcad (RTM) design program is then preferably verified using so-called Finite Element Analysis. This step is indicated at **401** in *Figure 4.*

A description of Finite Element Analysis can be found in a number of prior published references including that of R. K. Livesley entitled "Finite Elements: An Introduction For Engineers": Cambridge University Press, United Kingdom.

A similar exercise is carried out in order to determine the required trailing cantilever profile, ie the portion of the link shown at **300b** in *Figure 3.* This step is indicated at **402** in *Figure 4* but excludes the use of Mathcad.

As the finished suspension link is tapered in both thickness and width, it is necessary to calculate the amount of steel that is required in each part of the final product after it has been subjected to rolling operations in order to produce the desired thickness tapers and the width tapers. This is because, as, for example, the thickness tapering rolling operation is carried out it will cause the width tapering to be altered.

This calculation is indicated at **403** at *Figure 4.* In order to achieve the required width tapering, it is necessary to design the rolls in such a way as to ensure that during the manufacturing processes the link being tapered does not twist during the rolling process and secondly, the required finished edge profile is produced. The detailed design of the rolls is illustrated in *Figure 11.* This step in the design procedure is indicated at **404** in *Figure 4.*

The manufacturing taper details are then generated for all four tapering operations as indicated at **405** in *Figure 4.*

Finally, the steel blank details are determined as indicated at **406** in *Figure 4.*

The most critical part of the design of the link shown in *Figure 3,* is that of the leading cantilever **300a,** as this is under considerable load when the vehicle is in use. In comparison, the design of the trailing cantilever portion **300b** of the link **300** shown in *Figure 3* is less critical.

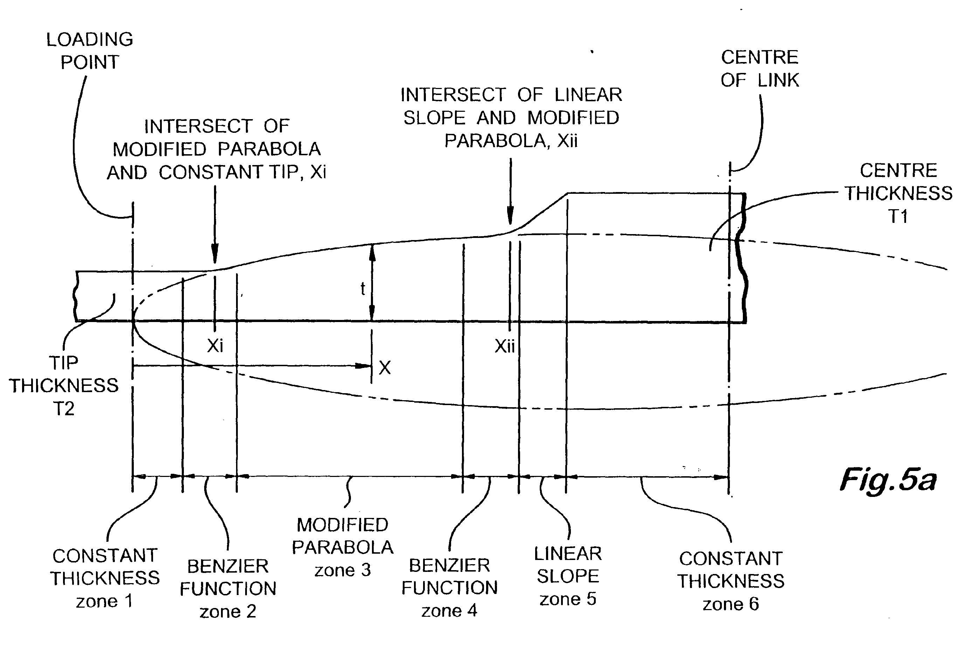

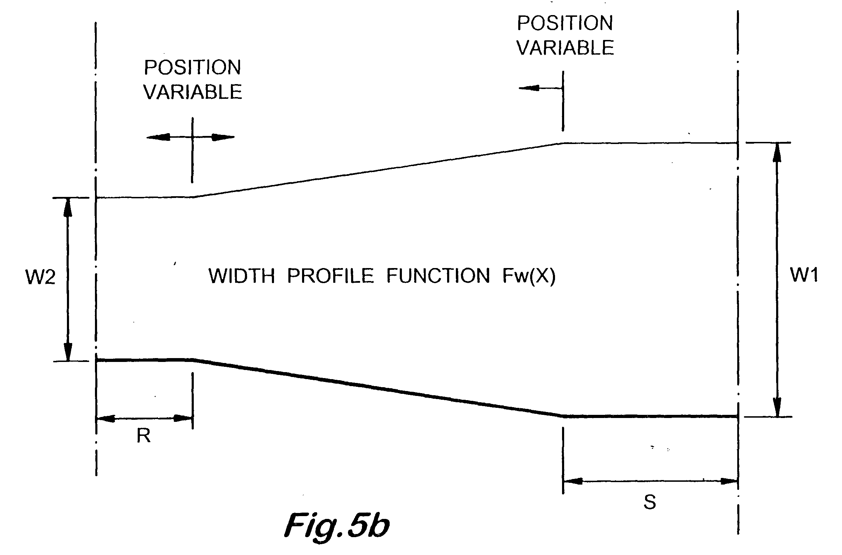

*Figure* 5 illustrates in more detail the calculated side elevation thickness taper of the leading cantilever **300a.** This is not a representation of the actual profile shape but more a graph or histogram illustrating the overall thickness along the length of the leading cantilever.

This side elevation taper can be considered to comprise six zones as indicated in *Figure 5.*

In zone 1, the steel of the link is of constant thickness t. In zone 2, the profile of that part of the link, in side elevation, is a Bezier function and serves as a blend region between zones 1 and 3.

Zone 3 is a modified parabola.

Zone 4 is similar to zone two in that it is a Bezier function which forms the blend region between zones 3 and 5. Zone 5 has a surface which is a linear slope and zone 6 is of constant thickness t.

After taper rolling the link thickness profile will be equally distributed either side of the neutral axis of the link.

In the following there is given mathematical equations defining the upper surfaces of zones 1 to 6.

**Zone 1:**

This is a constant input value, which is the tip thickness T2

$$\text{Equation} \qquad t = T2$$

**Zone 2:**

This is a Bezier function and is a blend region between zones one and three

$$\text{Equation} \qquad t = (1-u)^3 t_1 + 3u(1-u)^2 t_2 + 3u^2(1-u)t_3 + u^3 t_4$$

for $\qquad 0 \leq u \leq 1$
where $\qquad x = (1-u)^3 x_1 + 3u(1-u)^2 x_2 + 3u^2(1-u)x_3 + u^3 x_4$
and points $\qquad (x_1,t_1)(x_2,t_2)(x_3,t_3)(x_4,t_4)$ define the Bezier Curve

**Zone 3:**

This is a modified parabola

$$\text{Equation} \qquad t = (6P.x/BS.f_w(x))^{0.5}$$

where $\qquad$ BS = bending stress, P = load
and $\qquad f_w(x)$ is a value of width function

**Zone 4:**

This is a Bezier function and is a blend region between zones three and five

$$\text{Equation} \qquad t = (1-u)^3 t_5 + 3u(1-u)^2 t_6 + 3u^2(1-u)t_7 + u^3 t_8$$

for $0 \le u \le 1$
where $x = (1-u)^3 x_5 + 3u(1-u)^2 x_6 + 3u^2(1-u)x_7 + u^3 x_8$
and points $(x_5,t_5)(x_6,t_6)(x_7,t_7)(x_8,t_8)$ define the Bezier Curve

**Zone 5:**

This is a linear slope

$$\text{Equation} \qquad t = M.x + C$$

gradient M is an input value and C is calculated using the centre thickness and input value for start of taper.

**Zone 6:**

This is a constant input value, which is the Centre thickness

$$\text{Equation} \qquad t = T1$$

Points $(x_1,t_1)....(x_8,t_8)$ are calculated from input values of $x_1 .... x_8$.

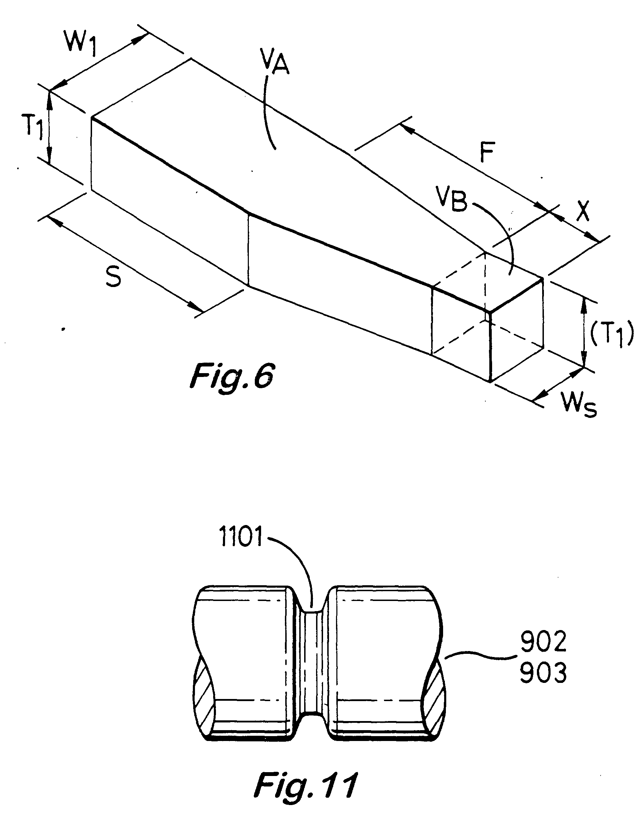

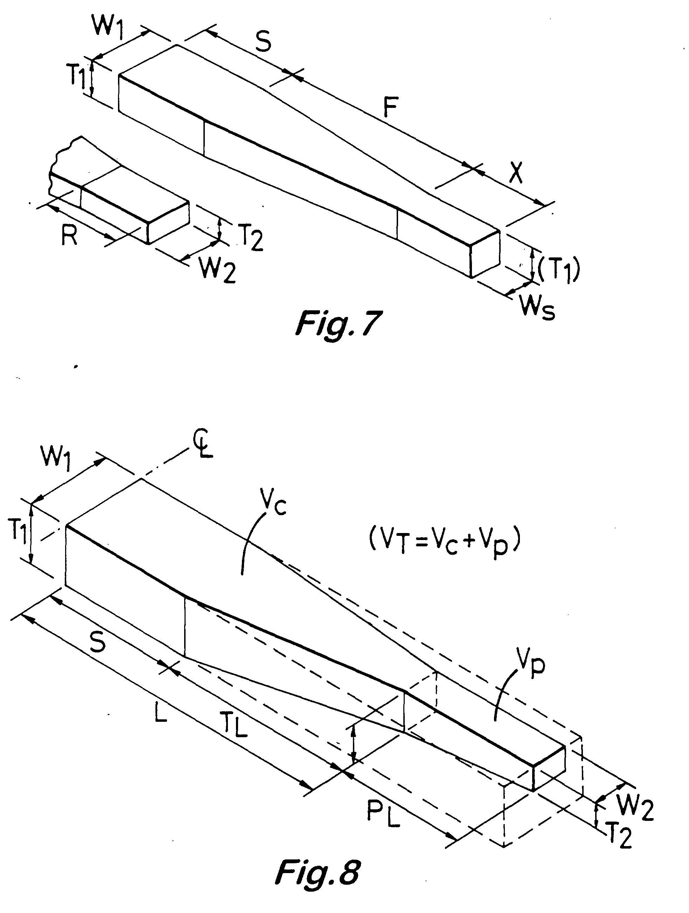

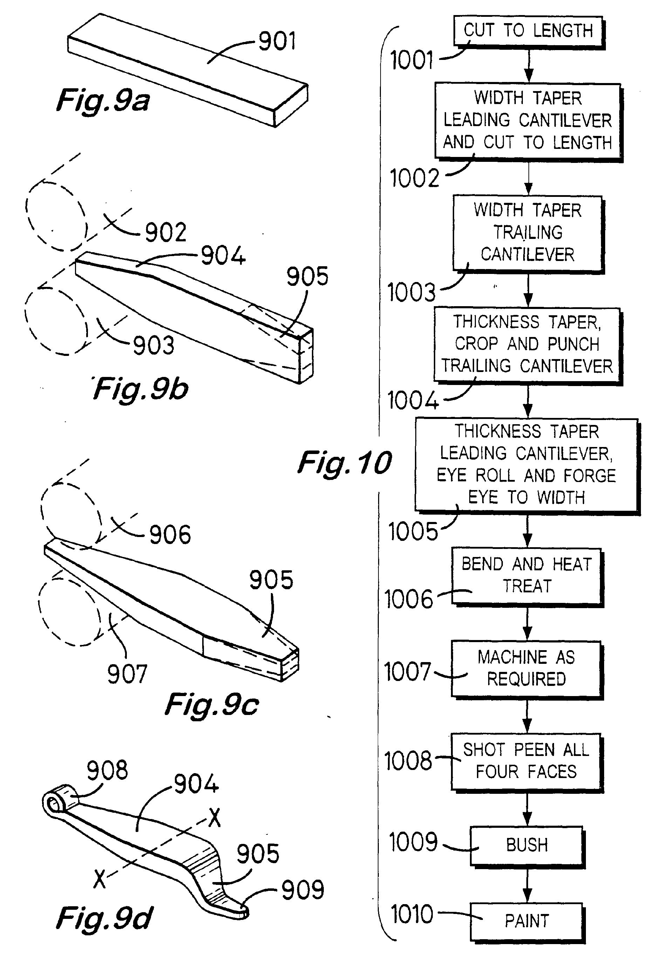

*Figures 6* and *8* each illustrate an intermediate stage in the design process by which the calculated volumes of steel in various parts of the leading and trailing cantilevers are used to determine the dimensions of this intermediate stage so calculated to ensure that during the manufacturing process the final desired edge profile is achieved. More specifically the length of that part of the cantilever which is to be tapered has to be determined such that the width tapering step (**9b** in *Figure 9*) produces an intermediate edge profile which when it is afterwards subjected to the thickness profile step (**9c** in *Figure 9*) will produce the final desired edge profile.

**Re: *Figure 6* (Leading cantilever - width tapering calculations)**

**Definitions:**

| | |
|---|---|
| VC | is the leading cantilever volume without end forms |
| F | Length of width taper |
| x | Length of parallel run out |
| S | Distance from centre to start of tapers |
| $W_1$ | Original stock width |
| $T_1$ | Original stock thickness |
| $T_2$ | Tip thickness |
| $W_S$ | Side tapered width to give finished width W2 |
| R | Length of parallel run out to loading point |

Hence F and x are given by the following equations

$$F = \frac{(V_c - W_1 T_1 S - R W_2 T_2)}{[W_S T_1 + \frac{T_1}{2}(W_1 - W_S)]}$$

$$X = \frac{R W_2 T_2}{T_s W_s}$$

**Re: *Figure 7* (Trailing cantilever - volume calculation)**

**Calculations:**

| | |
|---|---|
| W1 | Stock Width |
| T1 | Stock thickness |
| S | Distance from centre to start of tapers |
| L | Distance from centre to end of width taper |
| T2 | Tip thickness |
| TI | Intermediate thickness |
| W2 | Tip width |
| TL | Tapered length for width taper |
| PL | Parallel run out |
| VT | Total volume |
| $V_c$ & $V_p$ | Component volumes |

*Figure 7* shows the developed view of a trailing cantilever design prior to bending.

This general case caters for the possibility of running the width taper out parallel (over length PL) whilst continuing to run the thickness taper out to a final tip (T2). Both tapers for the rear cantilever are linear in this example but they could be other shapes.

The finished cantilever is then drawn, and the stresses calculated and assessed against existing durability criteria. The total volume is required to calculate the cantilever weight and the initial width taper details. The width taper calculations are shown (*Figure 8*).

**The Total Volume is given by:**

$$V_T = V_c + V_P$$

Where,

$$V_c = W_1 T_1 L - \tfrac{1}{2}[(T_1 - T_I)T_L W_1 + (W_1 - W_2)T_L T_I)] \frac{-T_L}{6} (W_1 - W_2)(T_1 - T_I)$$

$$V_P = W_2 P_L T_2 + \tfrac{1}{2}(T_I - T_2) P_L W_2$$

$$T_I = T_1 - \frac{T_L (T_1 - T_2)}{(T_L - P_L)}$$

**Re: *Figure 8* (Trailing cantilever - width taper calculations**

**Calculations:**

i. assume constant thickness is maintained (T1)
ii. volumes $V_c$ and $V_p$ are formed from intermediate volumes $V_a$ and $V_b$

**Definitions:**

| | |
|---|---|
| F | Length of width taper |
| x | Length of parallel run out |
| Ws | Tapered width to give finished width W2 |
| $V_a$ and $V_b$ | Component volumes |

Other variables as previously defined
Hence F and x are given by the following equations

$$F = \frac{[V_c - W_1 T_1 S]}{[T_1 W_S + \frac{T_1}{2}(W_1 - W_S)]}$$

$$X = \frac{P_L W_2}{T_1 W_S} [T_2 + \frac{1}{2}(T_I - T_2)]$$

## The Manufacturing Method: *Figures 9 to 11*

The manufacturing process will now be described with reference to *Figures 9 to 11.*

As indicated earlier the manufacturer of a suspension link starts with a length of steel, stock or bar which is first cut to the desired length for the suspension link as indicated at **901** in *Figure 9* and **1001** in *Figure 10.*

The desired tapered profile, both in width and thickness of the two cantilevered portions **300a** and **300b** are formed by the well known so-called hot rolling method.

In this method these portions of the blank **901** which are to be shaped is heated and then passed between a first pair of rollers shown at **902** and **903** at **9b** in *Figure 9,* in order to produce the desired width-tapered profile for both the leading and trailing cantilever portions.

However, the rollers **902** and **903** have a significant modification over the standard rollers which are used in this well known process.

This modification consists in the formation of a groove **1101** formed in each of the rollers **902** and **903** (see *Figure 11*).

These grooves **1101** prevent twisting of the blank **901** during the width tapering operations when the blank is on edge and likely to move away from the vertical and introduce an intermediate edge form (as referred to earlier re *Figures 6 to 8*) which leads to the required finished edge profile.

The dimensions of the initial width tapers have been determined from a combination of width tapering trials and adopting a constant volume approach which works backwards from the finished design profiles as illustrated with respect to *Figures 5 to 7.*

The leading cantilever **300a** is indicated at **904** in *Figure 9* and the trailing cantilever portion **300b** is indicated at **905** in *Figure 9.*

After the leading cantilever portion **300a/904** has been tapered in width, any excess length resulting from that tapering process is cut off the blank. These steps are indicated at **1002** in *Figure 10.*

The width tapering of the trailing cantilever **300b, 905** is indicated at **1103** in *Figure 10.*

After the two cantilevered portions of the link have been tapered in width (*Figure 9b*), they are then tapered in thickness, as shown in *Figure 9c* of *Figure 9* and at **1004** and **1005** in *Figure 10.*

After the rolling process to provide the dual-taper referred to earlier, the blank is bent to the final shape shown in *Figure 3* which includes a mounting eye **908** at one end and the air suspension unit mounting surface **909** at the other end. Surface **909** being stepped down in relation to the leading cantilever portion **300a.**

After the appropriate bending of the blank **901** to the shape shown at **905** in *Figure 9*, the steel is heat treated, the bending and the heat treatment being indicated at **1006** in *Figure 10.*

Any final machining of the blank that may be required is then carried out as indicated at **1007** in *Figure 10.*

The blank is then shot peened on all four surfaces in order to work-harden those surfaces so as to increase the stress capability of the suspension link. This step is indicated at **1008** in *Figure 10.*

A mounting bush is then inserted into the eye **908** at step **1009** in *Figure 10* and the link is finally painted as indicated at step **1010** in *Figure 10.*

To summarise, the known hot taper rolling manufacturing process is employed to produce the required dual-tape profile in both width and thickness but with a significant modification to one pair of the rollers. In the process described, the width tapering is carried out prior to the thickness tapering.

Hot taper rolling in either width or thickness will result in a change of the other dimension. One of the critical areas of the manufacturing process as described is therefore to predetermine by the appropriate design steps the starting size and shape of the blank which after taper rolling will produce the desired final dual-taper profile.

## Claims

1. A motor road vehicle suspension link which comprises leading and trailing cantilever portions, both portions being tapered in both plan and elevation, the free end of the leading portion being shaped to be pivotally mounted to a vehicle body and the trailing end being adapted to have an air suspension unit mounted upon it.

2. A suspension link as claimed in claim **1,** in which the trailing cantilever is stepped down with respect to the leading cantilever.

3. A suspension link as claimed in claim **1** or **2,** in which the leading cantilever comprises a first zone which is formed to a constant thickness but may vary in width, the first zone being at the free end of the leading cantilever portion, a second zone which may be untapered in width but is tapered in thickness, the tapering forming a blend between the first zone and a third zone, the third zone being tapered in thickness and width, a fourth zone connecting the third zone with a fifth zone, the fourth zone being a blend zone between the third and fifth zone similar to the second zone, a fifth zone which may be tapered in width but is tapered in thickness and a sixth zone adjoining the fifth zone, the sixth zone being of constant width and thickness.

4. A suspension link as claimed in any one of claims **1** to **3,** in which the trailing cantilever has a first zone adjacent a mounting point which first zone is untapered, a second zone following the first zone which second zone is tapered in width and thickness and a third zone adjoining the second zone which can be tapered in width and/or thickness.

5. A motor road vehicle air suspension having a pair of suspension links as claimed in any one of claims **1** to **4.**

6. An air suspension as claimed in claim **5,** in which the leading end of each link is pivotally mounted to the vehicle and the trailing end of each link has an air suspension unit mounted on it between it and the vehicle body.

7. A method of manufacturing a suspension link as claimed in any previous claim which includes the following steps:

   a) determining the leading cantilever profile to give the required rate/stress characteristics;
   b) determining the required trailing cantilever profile in order to optimise its shape;
   c) determining the initial width taper details for both the leading and trailing cantilevers in order to give the finished width taper profiles after the thickness tapering process has taken place;
   d) designing the grooved rolls for the width tapering manufacturing operation to ensure that the required edge profile is achieved after the thickness tapering;
   e) generating the manufacturing taper details for all four tapering operations; and
   f) determining the steel blank details.

8. A method as claimed in claim **7**, in which the first step referred to in claim **7** is verified using Finite Element Analysis.

9. A method of manufacturing the suspension link as claimed in any one of claim **1** to **7** 6 which comprises the steps of:

   a) taking a rectangular steel blank having an overall size which is an approximation to the finished suspension link;
   b) passing each end of the blank between two rotating rollers, successively, in order to form the desired tapering of the link in width view;
   c) passing each of the plan-view tapered ends of the link between the said rollers in turn and successively in order to form the taper of each end of the link in elevational view;
   d) forming a mounting eye on the free end of the leading cantilever portion of the link;
   e) bending the trailing cantilever portion of the link to form a mounting surface for an air suspension unit.

**10.** A hot rolling manufacturing apparatus for use in the method of claim 9 which includes at least one pair of rollers, at least one of those rollers having a peripheral groove formed therein such as to locate substantially vertically a workpiece inserted between the rollers.

**11.** Apparatus as claimed in claim **10** in which the said groove is also adapted to form a desired finished edge profile on the workpiece.

**12.** A motor road vehicle suspension link substantially as hereinbefore described with reference to and as shown in *Figures 3* to *11* of the accompanying drawings.

**13.** A method of manufacturing a motor road vehicle suspension link substantially as hereinbefore described with reference to and as shown in *Figures 3* to *11* of the accompanying drawings.

Fig.1

Fig.2

Fig.3a

Fig.3b

Fig.3c

DETERMINE LEADING CANTILEVER PROFILE TO GIVE THE REQUIRED RATE / STRESS CHARACTERISTICS USING MATHCAD DESIGN PROGRAM AND VERIFY USING FE ANALYSIS

—401

DETERMINE THE REQUIRED TRAILING CANTILEVER PROFILE USING FE ANALYSIS TO OPTIMISE SHAPE

—402

DETERMINE INITIAL WIDTH DETAILS FOR BOTH CANTILEVERS TO GIVE THE FINISHED TAPER PROFILES AFTER THICKNESS TAPERING PROCESS

—403

DESIGN GROOVED ROLLS FOR WIDTH TAPERING OPERATION TO ENSURE THE REQUIRED EDGE PROFILE IS ACHIEVED AFTER THICKNESS TAPING

—404

GENERATE MANUFACTURING TAPER DETAILS FOR ALL FOUR TAPERING OPERATIONS

—405

DETERMINE STEEL BLANK VOLUME DETAILS

—406

*Fig.4*

LOADING POINT

INTERSECT OF MODIFIED PARABOLA AND CONSTANT TIP, Xi

INTERSECT OF LINEAR SLOPE AND MODIFIED PARABOLA, Xii

CENTRE OF LINK

CENTRE THICKNESS T1

TIP THICKNESS T2

t

Xi

X

Xii

CONSTANT THICKNESS zone 1

BENZIER FUNCTION zone 2

MODIFIED PARABOLA zone 3

BENZIER FUNCTION zone 4

LINEAR SLOPE zone 5

CONSTANT THICKNESS zone 6

*Fig.5a*

EP 1 138 432 A2

*Fig.5b*

$W_1$

$VA$

$T_1$

$F$

$VB$

$X$

$S$

$(T_1)$

$W_S$

*Fig.6*

1101

902
903

*Fig.11*

**Fig.7**

$(V_T = V_C + V_p)$

**Fig.8**

Fig.9a

901

Fig.9b

902
904
905
903

Fig.10

Fig.9c

906
905
907

Fig.9d

908
904
X
905
X
909

| CUT TO LENGTH | 1001 |

WIDTH TAPER LEADING CANTILEVER AND CUT TO LENGTH — 1002

WIDTH TAPER TRAILING CANTILEVER — 1003

THICKNESS TAPER, CROP AND PUNCH TRAILING CANTILEVER — 1004

THICKNESS TAPER LEADING CANTILEVER, EYE ROLL AND FORGE EYE TO WIDTH — 1005

BEND AND HEAT TREAT — 1006

MACHINE AS REQUIRED — 1007

SHOT PEEN ALL FOUR FACES — 1008

BUSH — 1009

PAINT — 1010